# EUROPÄISCHE PATENTANMELDUNG

(11) **EP 4 550 043 A1**
(43) Veröffentlichungstag der Anmeldung: **07.05.2025**
(21) Anmeldenummer: 24211216.7
(22) Anmeldetag: 06.11.2024
(51) Int. Cl.: G02F 1/35, G02F 1/355, G02F 1/39, H01S 3/108, H01S 3/23

(54) **OPTISCH-PARAMETRISCHER VERSTÄRKER**

(30) Priorität: 06.11.2023 DE 102023130602
(71) Anmelder: SI Stuttgart Instruments GmbH, 70565 Stuttgart (DE)
(72) Erfinder: Steinle, Tobias, 70499 Stuttgart (DE); Giessen, Harald, 67297 Marnheim (DE)
(74) Vertreter: dompatent von Kreisler Selting Werner - Partnerschaft von Patent- und Rechtsanwälten mbB

(57) **Zusammenfassung**

Optisch-Parametrischer Verstärker mit einem Verstärkerkristall und einer Spiegelanordnung mit einer Vielzahl an Spiegeln, wobei die Spiegelanordnung einen Einkoppelspiegel und einen Auskoppelspiegel aufweist, wobei über den Einkoppelspiegel Pumplicht in die Spiegelanordnung eingekoppelt wird, wobei mittels des Pumplichts im Verstärkerkristall Signallicht und Idlerlicht erzeugt wird, wobei das Signallicht die Spiegelanordnung über den Auskoppelspiegel verlässt, wobei in der Spiegelanordnung das Pumplicht mehrfach durch den Verstärkerkristall gelenkt wird, und wobei Pumplicht und Signallicht kollinear in der Spiegelanordnung geführt sind.

## Beschreibung

Die vorliegende Erfindung betrifft einen optisch-parametrischen Verstärker insbesondere zur Erzeugung und Verstärkung von Laserstrahlung in veränderbaren Wellenlängenbereichen.

Es gibt verschiedene Ansätze, um durchstimmbare Laserstrahlung zu erzeugen, wie z.B. optisch-parametrische Quellen, Quanten-Kaskaden-Laser (QCL), Diodenlaser mit externem Resonator (ECDL) oder Festkörperlaser (z.B. auf Titan: Saphir oder Cr:ZnSe-Basis). Alle Ansätze weisen einen limitierten Durchstimm-bereich auf, wobei die Natur dieser Limitierung in zwei Gruppen eingeteilt werden kann.

Die erste Gruppe ("laserbasiert") ist intrinsisch an die Möglichkeiten des laseraktiven Mediums gebunden, Licht durch stimulierte Emission zu verstärken. Die genannten Beispiele sind die breitbandigsten Vertreter ihrer Art und erreichen maximale Durchstimmbarkeit von ca. +/- 20% bezogen auf die Zentralwellenlänge. Es wurde noch kein Lasermedium gefunden, das eine Oktave Verstärken kann (also z.B. 500 - 1000 nm, oder 750 - 1500 nm).

Die zweite Gruppe sind optisch-parametrischen Quellen. Da hier kein Energieaustausch mit dem Verstärkungsmedium stattfindet und keine elektronischen, vibratorischen, oder rotatorischen Übergänge an-geregt werden, gibt es keine fundamentale Limitierung im Durchstimmbereich. Optisch-parametrische Verstärker können daher *theoretisch* beliebige Frequenzen ineinander umwandeln, sind aber dabei zum einen auf die Erfüllung der sog. Phasenanpassung angewiesen, zum anderen limitiert auf den Transparenzbereich des Verstärkermediums. Dadurch wird grundsätzlich ein Wellenlängenbereich, der eine oder mehr Oktaven umfasst (z.B. 1.5 - 4.5 µm) zugänglich gemacht.

Auch bei gegebener Materialtransparenz ergeben sich durch die Notwendigkeit der Phasenanpassung zwei Beschränkungen: Einerseits müssen in durchstimmbaren Quellen stets mehrere Elemente (fast immer mechanisch) bewegt werden, um einen großen Spektralbereich abzudecken. Dies stellt hohe technische Anforderungen an das optische Design, die Automatisierung der Ansteuerung und den Nutzer des Systems und geht mit Verschleißerscheinungen einher. Gleichzeitig wird eine sehr teure Technologie für die Herstellung des Verstärkerkristalls benötigt, die nur von wenigen Anbietern weltweit beherrscht wird, die Systemkosten signifikant beeinflusst und so einer wirtschaftlichen Skalierung im Weg steht.

Andererseits limitiert die Phasenanpassung auch fundamental das Produkt aus Verstärkung und spektraler Bandbreite. In der Praxis können kurze Pulse (< 50 fs) daher oft nur schwer oder unter bestimmten Bedingungen (z.B. bestimmte Pump-Signal Wellenlängenpaare in bestimmten Kristallen) verstärkt werden. Diese Limitierung ist fundamentaler Natur und kann auf das folgende Prinzip heruntergebrochen werden:
Kurze Kristalle ermöglichen breitbandige Verstärkung, aber mit sinkender Effizienz. Lange Kristalle ermöglichen gute Effizienz, aber nur in einem schmalbandigen Wellenlängenbereich.

Die limitierte Bandbreite und Effizienz lassen sich auf zwei Hauptfaktoren herunterbrechen:
(1) Optisch-parametrische Verstärkung ist umkehrbar (so dass nicht das Pumplicht in Signallicht und Idlerlicht umgewandelt wird, sondern Signallicht und Idlerlicht verbraucht und Pumplicht erzeugt wird). Über die Richtung des Energieflusses entscheidet nur die relative optische Phase der beteiligten drei Wellen. Diese ändert sich für gewöhnlich beim Durchlaufen des Kristalls. Sie kann für ein exaktes Wellenlängen-Triplett angepasst werden ("Phasenanpassung"). Mit zunehmendem spektralem Abstand zu diesem Arbeitspunkt kommt es zur Dephasierung des Prozesses. Ab einer gewissen Propagations-/Kristalllänge kommt es zur Rückumwandlung. Je länger die Propagationsstrecke durch den Kristall, desto geringer ist der erlaubte spektrale Abstand zum idealen Arbeitspunkt bevor dieser Effekt einsetzt.
(2) Zeitlicher "walk-off" zwischen den Laserpulsen, die umgewandelt werden sollen, so dass auf Grund zeitlicher Separierung keine Energieumwandlung mehr möglich ist. Dieser Effekt wird verursacht durch eine unterschiedliche Gruppengeschwindigkeit bzw. Dispersion der einzelnen Laserpulse auf Grund der unterschiedlichen Wellenlänge von Pumplicht und Signallicht (und ebenfalls Idlerlicht).

Aufgabe der vorliegenden Erfindung ist es einen optisch-parametrischen Verstärker zu schaffen mit einer verbesserten Umwandungseffizienz des Pumplichts in Signallicht, einer verbesserten Verstärkung sowie verbesserten Verstärkungsbandbreite.

Die Aufgabe der Erfindung wird gelöst durch einen optisch-parametrischen Verstärker gemäß Anspruch 1.

Der optisch-parametrische Verstärker gemäß der vorliegenden Erfindung weist einen Verstärkerkristall auf sowie eine Spiegelanordnung mit einer Vielzahl an Spiegeln. Weiterhin weist die Spiegelanordnung einen Einkoppelspiegel und einen Auskoppelspiegel auf, wobei der Einkoppelspiegel Pumplicht in die Spielanordnung eingekoppelt. Mittels des Pumplichts wird im Verstärkerkristall Signallicht und Idlerlicht erzeugt, wobei das Signallicht zusammen mit evtl. verbleibendem Pumplicht die Spiegelanordnung über den Auskoppelspiegel verlässt. Insbesondere kann zusammen mit dem Pumplicht unverstärktes Signallicht als Seed in die Spiegelanordnung eingekoppelt werden, wobei dann das eingekoppelte, unverstärkte Signallicht im Verstärkerkristall verstärkt wird. Hierbei können Einkoppelspiegel und Auskoppelspiegel als separate optische Elemente vorgesehen sein. Alternativ hierzu sind Einkoppelspiegel und/oder Auskoppelspiegel Spiegel der Spiegelanordnung, die Pumplicht und Signallicht innerhalb der Spiegelanordnung umlenken. Insbesondere können der Einkoppelspiegel und der Auskoppelspiegel derselbe Spiegel sein.

Hier und in der gesamten folgenden Beschreibung wird der erfindungsgemäße optisch-parametrische Verstärker beschrieben anhand einer Verstärkung des Signallichts. Hierbei kann Signallicht insbesondere das kurzwellige/energetisch höhere Licht bezeichnen, welches bei dem Konversionsprozess entsteht, bei dem Pumplicht in Signallicht und Idlerlicht umgewandelt wird. Alternativ hierzu können Signallicht und Idlerlicht vertauscht werden, so dass mit Signallicht das langwelligere/energetisch niedrigere Licht bezeichnet, welches bei dem Konversionsprozess aus dem Pumplicht entsteht.

Auf Grund der Spiegelanordnung wird erfindungsgemäß das Pumplicht in mehreren Umläufen in der Spiegelanordnung mehrfach durch den Verstärkerkristall gelenkt, sodass durch die Spiegelanordnung eine Multipassgeometrie geschaffen wird. Dabei ist ein Umlauf definiert als Weg des Pumplichts durch die gesamte Spiegelanordnung, bis das Pumplicht zum Ausgangsspiegel zurückkehrt. Somit kann das Pumplicht, ausgehend von dem Ausgangsspiegel, durch mindestens eine oder mehrere Reflexionen an jedem Spiegel der Spiegelanordnung (unter Umständen ebenfalls am Ausgangsspiegel selbst, sofern das Pumplicht in einem Umlauf mehr als einmal am Ausgangsspiegel reflektiert wird) zum Ausgangsspiegel zurückgeleitet werden, was genau einem Umlauf entspricht.

Erfindungsgemäß wird das Pumplicht und Signallicht kollinear in der Spiegelanordnung geführt. Pumplicht und Signallicht laufen somit einen identischen Weg durch die Spiegelanordnung. Da das Pumplicht mehrfach innerhalb der Spiegelanordnung umläuft, wird ebenfalls auch das Signallicht, welches im Verstärkerkristall erzeugt wird, in mehreren Umläufen in der Spiegelanordnung geführt. Durch die Multipassgeometrie erfolgt eine wiederholte Erzeugung des Signallichts, welche das Signallicht, das zum Auskoppelspiegel gelangt, verstärkt. Insbesondere kann hierdurch eine nahezu lineare Verstärkung des Signallichts mit Anzahl der Umläufe des Pumplichts und des Signallichts in der Spiegelanordnung erreicht werden. Hierdurch ist eine hohe Verstärkung möglich und eine Leistungsskalierung mit einem Verstärkungsfaktor von bis zu 1000 oder mehr kann erreicht werden im Vergleich zu konventionellen optisch-parametrischen Verstärkern insbesondere mit Einfachdurchgang durch den Verstärkerkristall. Weiter ist es für eine solche Verstärkung nicht erforderlich einen besonders langen Verstärkerkristall zu verwenden, was gleichzeitig die mögliche Verstärkungsbandbreite beschränken würde, wie vorstehend ausgeführt. Somit kann ein kurzer Verstärkerkristall verwendet werden, wodurch eine hohe Umwandlungseffizienz und eine große Verstärkungsbandbreite möglich wird. Des Weiteren können einfach herzustellende Kristalle verwendet und trotzdem große Durchstimmbereiche erreicht werden. "Einfach" bezieht sich hier darauf, dass z.B. der aufwändige Schritt des periodischen Polens nicht zwingend nötig ist.

Vorzugsweise ist der Optisch-Parametrische Verstärker ausgebildet bidirektional durchlaufen zu werden, so dass Licht auf identischem aber entgegengesetztem Weg den Verstärker und insbesondere die Spiegelanordnung durchlaufen kann.

Vorzugsweise durchläuft das Pumplicht nur einmal die Spiegelanordnung. Der optische-parametrische Verstärker ist somit ausgebildet als OPA (optical parametric amplifier), wobei selbstverständlich, wie vorstehend ausgeführt, innerhalb der Spiegelanordnung das Pumplicht mehrere Umläufe in der Multipassgeometrie der Spiegelanordnung durchläuft.

Alternativ ist die Spiegelanordnung in einem Resonator angeordnet, sodass Pumplicht und/oder Signallicht im Resonator oszillieren. Der optisch-parametrische Verstärker ist somit ausgebildet als OPO (optical parametric oscillator) Vorzugsweise handelt es sich bei dem Resonator um einen Faser-Feedback Resonator (FFR). Der optisch-parametrische Verstärker ist somit ausgebildet als Faser-Feedback Resonator OPO (optical parametric oscillator)(FFOPO). Somit ist neben dem nichtlinearen Verstärkerkristall noch eine optische Faser, insbesondere ausgebildet als single-mode Faser, innerhalb des Resonator angeordnet, durch die das Licht in jedem Umlauf geführt wird. Der Resonator kann ein Ringresonator oder ein linearer Resonator sein. Das Konzept weist die folgenden Vorteile auf: Die Faser ermöglicht es, beliebige Weglängen auf kleinstem Raum zu realisieren. Somit kann ein kompakter Aufbau erreicht werden. Weiterhin hat eine solche Faser einen räumlich stabilisierenden Effekt, da das Licht immer vom gleichen Punkt (Faserausgang) in den Freistrahlteil des Resonators übergeht. Das unterdrückt dejustierende Effekte z.B. durch Spiegelverkippung stark. Ebenso hat die Faser hat den räumlich stabilisierenden Effekt, dass höhere Moden nicht im Resonator umlaufen können, da die Faser ausgebildet als single-mode Faser nur die Grundmode führen kann und so in jedem Umlauf höhere Moden unterdrückt. Weiterhin hat die Faser hat einen zeitlich stabilisierenden Effekt, da sie absichtlich sehr viel Dispersion in den Resonator einfügt. Einzelnen Spektralkomponenten kommen daher nach einem Umlauf zu unterschiedlichen Zeiten zurück zum Verstärkerkristall und nur ein kleiner Teil davon hat einen zeitlichen Überlapp mit dem Pumppuls. Dadurch werden sehr stabil genau diese Spektralkomponenten verstärkt. Typischerweise sind spektrale Drifts dadurch 20 - 200-fach schwächer als in konventionellen Resonatoren.

Der erste Nachteil des faser-feedback Konzeptes ist, dass durch die Faser deutlich erhöhte Verluste in den Resonator eingebracht werden, da die Strahlung mindestens einmal, in linearen Resonatoren sogar mindestens zweimal in eine Faser gekoppelt werden muss. Diese Verluste belaufen sich typischerweise auf 50 - 80% des Umlaufverlusts. Der zweite Nachteil ist, dass die Faser nur einer limitierten Leistung ausgesetzt werden kann (typischerweise wenige mW bis wenige zehn mW) und dadurch die maximale Ausgangsleistung des FFOPOs limitiert wird. Das hat zwei Konsequenzen: Um mit diesen Verlusten trotzdem effizient zu funktionieren, braucht ein FFOPO einen hohen Auskoppelgrad. Dadurch wird vermieden, dass viel Leistung im verlustreichen Resonator verloren geht. Allerdings erhöht das den Resonatorumlaufverlust weiter, so dass typischerweise 98 - 99.9% Umlaufverlust erreicht wird. Das bedeutet, dass das Konzept nur dann funktioniert, wenn die Verluste durch den Gewinn im Verstärkermedium kompensiert werden können. FFOPOs benötigen daher eine sehr hohe Kleinsignalverstärkung, typischerweise Verstärkung von 50x - 1000x, um effizient zu funktionieren. Diese Verstärkung zu erreichen ist in konventionellen OPAs/OPOs nicht einfach, da konventionelle Kristalle üblicherweise solche enormen Kleinsignalverstärkungen nicht ermöglichen. Mit der Multipassanordnung gemäß der vorliegenden Erfindung konnte gezeigt werden, dass die Kleinsignalverstärkung um Größenordnungen verbessern werden konnte. Daher ergeben sich zwei Vorteile, wenn man FFOPO und die Anordnung gemäß der vorliegenden Erfindung kombiniert: Die Anordnung gemäß der vorliegenden Erfindung kompensiert durch seine intrinsisch hohe Kleinsignalverstärkung genau die Schwäche des FFOPOs der prinzipbedingt hohen Verluste. Der FFOPO stellt durch die räumlich stabilisierenden Effekte sicher, dass der Strahl präzise über viele Spiegel geführt werden kann und verhindert, dass sich höhere räumliche Moden ausbilden können.

Durch die Kombination wird eine Erweiterung das Anwendungsbereichs von FFOPOs hinsichtlich zwei Faktoren erreicht: FFOPOs mit sehr kurzen Pulsen (20 - 100 fs) werden möglich. Auf konventionellem Wege ist kein bekanntes Material in der Lage ausreichend Kleinsignalgewinn für diesen Anwendungsfall zu erzeugen. FFOPOs mit höherer Ausgangsleistung werden möglich. Auf konventionellem Wege limitiert die maximal rückgekoppelte Leistung die maximal erreichbare Ausgangsleistung.

Vorzugsweise ist der Verstärkerkristall in einem Brennpunkt der Spiegelanordnung angeordnet. Hierbei ist der Brennpunkt ein gemeinsamer Punkt, den Pumplicht und Signallicht in jedem der Umläufe durchläuft. Somit ist auf einfache Weise sichergestellt, dass der Verstärkerkristall in jedem der Umläufe des Pumplichts durch die Spiegelanordnung auch den Verstärkerkristall durchläuft, so dass Signallicht und Idlerlicht erzeugt werden. Insbesondere ist der Verstärkerkristall am Brennpunkt der Spiegelanordnung angeordnet.

Vorzugsweise weist die Spiegelanordnung einen und insbesondere genau einen Kreuzungspunkt auf. Im Kreuzungspunkt der Spiegelanordnung kreuzen sich der Strahlverlauf des Pumplichtes bzw. der Strahlverlauf des Signallichtes innerhalb eines Umlaufs. Hierbei handelt es sich um einen geometrischen Ort, der insbesondere unabhängig ist von einem Brennpunkt des Pumplichts bzw. Signallichts, also dem Ort maximaler Fokussierung. Weisen beispielsweise bekannte Geometrien wie die "Herriottzelle" gerade keinen solchen Kreuzungspunkt auf, sondern zeigen einen kreisförmigen Strahlverlauf, wodurch zu hohe Strahlungsdichten innerhalb des Verstärkermediums vermieden werden sollen. Dies ist jedoch in der vorliegenden Erfindung nicht erforderlich, da hier Kreuzungspunkt und Brennpunkt unabhängig voneinander gewählt werden können. Durch das Vorsehen eines Kreuzungspunktes kann ein einfaches und besonders kompaktes Design gewählt werden.

Vorzugsweise stimmen der Brennpunkt der Spiegelanordnung und der Kreuzungspunkt überein bzw. fallen zusammen.

Vorzugsweise wird der Verstärkerkristall auf Grund des Kreuzungspunktes nicht parallel vom Pumplicht bzw. Signallicht durchlaufen.

Vorzugsweise weist die Spiegelanordnung keine transmissiven Optiken, wie beispielsweise Linsen oder dergleichen auf. Insbesondere bei der Erzeugung kurzer Puls würde andernfalls ungewollt Dispersion erzeugt und chromatische Aberrationen hinzugefügt.

Vorzugsweise trifft das Pumplicht mehrfach auf einen oder mehrfach auf jeweils mehrere der Spiegel der Spiegelanordnung. Insbesondere trifft das Pumplicht mehrfach auf jeden der Spiegel der Spiegelanordnung, sodass das Pumplicht mehrfach durch den Verstärkerkristall gelenkt wird. Somit kann die Anzahl der benötigten Spiegel und damit der optischen Komponenten des optisch-parametrischen Verstärkers klein gehalten werden. Kosten des Aufbaus und Komplexität können hierdurch reduziert werden. Wie vorstehend beschrieben kann einer oder mehrere dieser Spiegel ebenfalls als Einkoppelspiegel und/oder Auskoppelspiegel dienen.

Vorzugsweise durchläuft das Pumplicht bei einem Umlauf durch die Spiegelanordnung den Verstärkerkristall genau einmal, insbesondere genau 2-mal und bevorzugt mehr als 2-mal.

Vorzugsweise durchläuft das Pumplicht den Verstärkerkristall bei einem Durchlauf durch die Spiegelanordnung insgesamt mehr als 4-mal, und insbesondere insgesamt mehr als 10-mal. Anders ausgedrückt ist die Spiegelanordnung ausgebildet, Pumplicht in mehr als 2 Umläufen, insbesondere mehr als 4 Umläufe, bevorzugt mehr als 5 Umläufe und besonders bevorzugt mehr als 10 Umläufe innerhalb der Spiegelanordnung zu führen (in Abhängigkeit davon, ob der Verstärkerkristall einmal oder 2-mal pro Umlauf durchlaufen wird).

Vorzugsweise durchläuft das Signallicht und das Pumplicht die Spiegelanordnung in einer planaren Geometrie. Mit anderen Worten liegen Signallicht und Pumplicht bei einem Umlauf durch die Spiegelanordnung in einer gemeinsamen Ebene. Hierdurch ist auf einfache Weise sichergestellt, dass die Polarisierung bei einem Umlauf erhalten bleibt. Alternativ können Signallicht und Pumplicht die Spiegelanordnung in einer 3D-Geometrie durchlaufen, wodurch mehr Umläufe bei gleicher Spiegelgröße erreicht werden können. Hierbei geht jedoch u.U. die Polarisierung verloren. Bei einer 3D Geometrie kann gerade keine einheitliche Ebene gefunden werden, in der alle Strahlen von Pumplicht und Signallicht innerhalb der Spiegelanordnung liegen.

Vorzugsweise ist einer oder mehrere Spiegel der Spiegelanordnung zumindest teilweise transparent für das Idlerlicht. Rückkonversion aus Idlerlicht und Signallicht in Pumplicht kann nur erfolgen, sofern Idlerlicht und Signallicht im Verstärkerkristall zusammenkommen. Da einer oder mehrere Spiegel der Spiegelanordnung zumindest teilweise transparent sind für das Idlerlicht, wird das Idlerlicht an den Spiegel nicht reflektiert, sondern aus der Spiegelanordnung ausgekoppelt und steht somit nicht bereit für die Rückkonversion. Somit ist einer oder mehrere Spiegel absorptiv oder transmissiv für die Wellenlänge des Idlerlichts. Insbesondere weist der eine oder die mehreren Spiegel eine Reflektivität von 50% oder weniger, bevorzugt 10% oder weniger und besonderes bevorzugt 2% oder weniger auf für das Idlerlicht, so dass von einem oder mehreren Spiegeln 50% oder weniger, bevorzugt 10% oder weniger und besonderes bevorzugt 2% oder weniger vom Idlerlicht reflektiert werden.

Insbesondere weisen alle Spiegel der Spiegelanordnung eine Reflektivität von 95% oder mehr, bevorzugt 99% oder mehr und besonders bevorzugt 99,9% oder mehr auf für das Pumplicht und/oder das Signallicht, so dass 95% oder mehr, bevorzugt 99% oder mehr und besonders bevorzugt 99,9% oder mehr vom Pumplicht und/oder dem Signallicht von den Spiegeln der Spiegelanordnung reflektiert werden.

Vorzugsweise weist der Verstärkerkristall eine Länge auf, die gleich oder kleiner ist als die (zeitliche) Walk-off Länge zwischen Signallicht und Pumplicht. Dabei bezeichnet die Walk-off Länge die Länge, welche Signallicht und Pumplicht auf Grund der unterschiedlichen Gruppengeschwindigkeit innerhalb Spiegelanordnung und des Verstärkerkristalls zeitlich miteinander überlappen. Hierdurch wird sichergestellt, dass Pumplicht innerhalb des Verstärkerkristalls effizient in Signallicht umgewandelt wird und insbesondere keine Rückkonversion stattfindet bei Überschreiten der Walk-off Länge. Somit wird durch die Verwendung eines kurzen Kristalls die Umwandlungseffizienz verbessert.

Vorzugsweise wird das Pumplicht auf einem oder mehreren der Spiegel an unterschiedlichen Orten auf der jeweiligen Spiegeloberfläche des Spiegels reflektiert. Pumplicht (und auf Grund der kollinearen Führung ebenfalls Signallicht und Idlerlicht) treffen somit an unterschiedlichen Orten auf der Spiegeloberfläche des Spiegels auf und werden reflektiert. Somit kann mit relativ wenigen optischen Elementen eine Multipassgeometrie erreicht werden, da die Spiegeloberfläche eines Spiegels mehrfach genutzt wird zur Reflexion des Signallichts, Pumplichts und/oder Idlerlichts. Insbesondere, wenn das Signallicht und das Pumplicht die Spiegelanordnung in einer planaren Geometrie durchlaufen, sind die Orte auf der Spiegeloberfläche entlang einer geraden Linie angeordnet, wobei diese Linie die Schnittlinie zwischen der gemeinsamen Ebene der planaren Geometrie und der Spiegeloberfläche darstellt.

Vorzugsweise ist mindestens ein Spiegel der Spiegelanordnung als Fokussierspiegel ausgebildet zur Erzeugung eines Brennpunkts in dem der Verstärkerkristall angeordnet ist. Hierbei kann es sich bei dem Fokussierspiegel um einen gekrümmten Spiegel handeln, wobei die Spiegeloberfläche insbesondere konvex ausgebildet ist und besonders bevorzugt als sphärischer Spiegel oder Parabolspiegel. Insbesondere wird durch die Krümmung des Fokussierspiegels der Brennpunkt erzeugt. Weiterhin kann, auf Grund der unterschiedlichen Orte, an denen das Pumplicht und Signallicht auf die Spiegelfläche des Fokussierspiegels trifft, der Kreuzungspunkt erzeugt werden. Somit wird durch den Fokussierspiegel sowohl der Brennpunkt erzeugt als auch der Strahlverlauf in der MultipassGeometrie definiert. Somit können durch geeignete Wahl des Fokussierspiegels und der Orte, an denen das Pumplicht bzw. Signallicht auf dem Fokussierspiegel reflektiert werden, sowohl der Brennpunkt als auch der Kreuzungspunkt des Strahlverlaufs innerhalb der Spiegelanordnung unabhängig und optimal gewählt werden.

Vorzugsweise ist ein oder mehrere Spiegel und insbesondere alle Spiegel der Spiegelanordnung als dichroische Spiegel ausgebildet.

Vorzugsweise ist die Dispersion der Spiegel der Spiegelanordnung ausgebildet die Dispersion von Signallicht und Pumplicht pro Umlauf im Wesentlichen zu kompensieren. Somit wird durch die Spiegel der Spiegelanordnung eine Gruppengeschwindigkeitsverzögerung und insbesondere eine Gruppengeschwindigkeitsdispersion kompensiert. Hierdurch wird sichergestellt, dass auch innerhalb der Spiegelanordnung keine Dephasierung von Pumplicht und Signallicht auftritt, welche die Konversionseffizienz herabsetzen würde. Eine Kompensation der Dispersion erfolgt dabei insbesondere über eine Bandbreite von 10nm oder mehr, bevorzugt 100 nm oder mehr und besonders bevorzugt 1000 nm und mehr. So kann beispielsweise eine Kompensation im Bereich von Wellenlängen zwischen 1500 nm und 1900 nm. Somit erfolgt durch die Spiegel der Spiegelanordnung insbesondere sowohl eine Dispersionskorrektur als auch eine spektrale Filterung, wenn ein oder mehrere Spiegel der Spiegelanordnung zumindest teilweise transparent sind für das Idlerlicht.

Vorzugsweise beträgt die Photonenkonversionseffizienz mehr als 60 %, vorzugweise mehr als 70 % und besonders bevorzugt mehr als 80 %. Somit werden mehr als 60 % der Pumplichts umgewandelt in Signallicht und Idlerlicht. Dabei bezeichnet die Photonenkonversionseffizienz die Effizienz, mit der Pumpphotonen in Signalphotonen und Idlerphotonen umgewandelt werden.

Vorzugsweise ist das Pumplicht gepulst mit einer Pulslänge von weniger als 250 fs und insbesondere weniger als 150 fs. Insbesondere ist das Signallicht gepulst mit einer Pulslänge von weniger als 10 ps und insbesondere weniger 500 fs. Hierbei ist insbesondere die Pulsdauer der Signalpulse im Wesentlichen stabil und unabhängig von der Verstärkung. Insbesondere ist es möglich Puls mit Pulslängen von bis zu 25 fs, bevorzugt bis zu 10 fs direkt zu verstärken. Vorzugsweise weist der Verstärkerkristall eine Länge auf von 10 mm oder weniger, vorzugsweise 5 mm oder weniger und besonders bevorzugt 1 mm oder weniger. Insbesondere bei Pulslängen von 500 fs und weniger und insbesondere 25 fs und weniger sind kurze Verstärkerkristalle erforderlich um eine ausreichende Bandbreite zu erhalten.

Alternativ weist der Verstärkerkristall eine Länge von 25 mm und mehr auf. Insbesondere bei der Verstärkung von langen Pulsen mit Pulslängen von mehr als 1 ps, insbesondere mehr als 1 ns oder cw-Verstärkung können zur Verbesserung der Effizienz lange Verstärkerkristalle verwendet werden.

Vorzugsweise wird ein Seed verwendet zur Initiierung des Konversionsprozesses. Hierbei wird der Verstärkerkristall mit Laserlicht beleuchtet, so dass eine Mode des Verstärkerkristalls bevorzugt wird, welche sodann für den Konversionsprozess genutzt wird. Hierbei stimmt die Wellenlänge des Seeds im Wesentlichen überein mit der Wellenlänge des Signallichts oder des Idlerlichts. Insbesondere handelt es sich um einen cw-Seed. Alternativ hierzu kann auch der Seed gepulst sein und bevorzugt eine Pulslänge aufweisen, die der Pulslänge des Pumplichts im Wesentlichen entspricht.

Vorzugsweise weist die Spiegelanordnung weniger als 10 Spiegel, bevorzugt 6 oder weniger Spiegel und besonders bevorzugt 4 oder weniger Spiegel auf. Insbesondere weist die Spiegelanordnung genau 4 Spiegel auf. Alternativ weist die Spiegelanordnung genau 6 Spiegel auf.

Vorzugsweise weist die Spiegelanordnung einen Kristallspiegel auf, wobei der Kristallspiegel insbesondere am Kreuzungspunkt der Spiegelanordnung angeordnet ist. Hierdurch treffen nahezu alle Lichtstrahlen eines Umlaufs auf einen Punkt einer kleinen Fläche am Kristallspiegel auf. Der Kristallspiegel kann somit klein ausgebildet sein.

Vorzugsweise ist der Verstärkerkristall angeordnet zwischen dem Fokussierspiele und dem Kristallspiegel.

Vorzugsweise ist der Kristallspiegel als planarer Spiegel ausgebildet.

Vorzugsweise ist der Kristallspiegel integriert in den Verstärkerkristall. Insbesondere fallen hierbei Brennpunkt und Kreuzungspunkt mit dem Kristallspiegel und dem Verstärkerkristall zusammen und sind somit alle am selben Ort. Dabei kann der Kristallspiegel ausgebildet sein als dichroitische Beschichtung einer Seite des Verstärkerkristalls.

Vorzugsweise weist die Spiegelanordnung mindestens einen und bevorzugt genau einen oder genau 2 Retroreflektoren auf. Dabei kann ein Retroreflektor ausgebildet sein durch zwei im Winkel zueinanderstehende planare Spiegel gebildet werden. Insbesondere beträgt der Winkel 90°. Insbesondere keiner der Retroreflektoren ausgebildet durch ein Prisma. Insbesondere bei kurzen Pulsen würde die Verwendung eines Prismas ungewollte Dispersion erzeugen. Alternativ hierzu ist der Verstärkerkristall prismenförmig, so dass durch zueinander gewinkelte Seitenflächen des Verstärkerkristalls ein Retroreflektor gebildet wird. Hierzu können die Seitenflächen des Verstärkerkristalls insbesondere eine dichroitische Beschichtung aufweisen.

Vorzugsweise ist der Verstärkerkristall zumindest teilweise zwischen den Spiegeln des mindestens einen Retroreflektors angeordnet.

Vorzugsweise liegt der Ort des Kreuzungspunktes zwischen den Spiegeln des mindestens einen Retroreflektors oder ausgehend vom Fokussierspiegel hinter den Spiegeln des mindestens einen Retroreflektors.

Vorzugsweise liegt der Kristallspiegel zwischen den Spiegeln des mindestens einen Retroreflektors oder ausgehend vom Fokussierspiegel hinter den Spiegeln des mindestens ei-nen Retroreflektors.

Vorzugsweise wird der Verstärkerkristall durchlaufen zwischen dem Fokussierspiegel und dem Kristallspiegel. Dabei kann der Kristallspiegel integral/einstückig/monolithisch ausgebildet sein mit dem Verstärkerkristall oder unmittelbar mit diesem verbunden sein. Alternativ hierzu ist der Kristallspiegel ausgebildet als separates Bauteil und beabstandet vom dem Verstärkerkristall. Insbesondere wird der Verstärkerkristall genau 2-mal pro Umlauf durchlaufen, einmal vom Fokussierspiegel zum Kristallspiegel und einmal vom Kristallspiegel zum Fokussierspiegel.

Vorzugsweise weist die Spiegelanordnung einen ersten Spiegel, einen Fokussierspiegel, einen zweiten Spiegel und einen Kristallspiegel aufweist, wobei ein Umlauf umfasst: eine erste Reflexion auf dem ersten Spiegel zum Fokussierspiegel, eine zweite Reflexion auf dem Fokussierspiegel zum Kristallspiegel, eine dritte Reflexion auf dem Kristallspiegel zum Fokussierspiegel, eine vierte Reflexion auf dem Fokussierspiegel zum zweiten Spiegel und eine fünfte Reflexion auf dem zweiten Spiegel zum ersten Spiegel, wobei Pumplicht und Signallicht mehrere Umläufe durchlaufen. Somit wird durch den ersten Spiegel, den Fokussierspiegel, den zweiten Spiegel und den Kristallspiegel eine Multipassgeometrie geschaffen, bei der Pumplicht und Signallicht mehrfach umlaufen und mehrfach den Verstärkerkristall durchlaufen.

Vorzugsweise wird der Verstärkerkristall durchlaufen zwischen dem zweiten Spiegel und dem ersten Spiegel, wobei der Verstärkerkristall insbesondere an unterschiedliche Stellen durchlaufen wird. Somit wird der Verstärkerkristall bei Übergang vom ersten Umlauf zum zweiten Umlauf und jedem weiteren Umlauf durchlaufen.

Vorzugsweise an unterschiedlichen Durchlaufpositionen des Verstärkerkristalls unterschiedliche Signal- und Idlerwellenlängenpaare verstärkt. Dies kann beispielsweise erfolgen durch eine unterschiedliche Länge oder eine Änderung einer periodischen Polung des Kristalls.

Vorzugsweise umfasst die Spiegelanordnung eine ersten Spiegel, einen ersten Fokussierspiegel, einen zweiten Spiegel, einen dritten Spiegel, einen zweiten Fokussierspiegel und einen vierten Spiegel, wobei der erste Fokussierspiegel und der zweite Fokussierspiegel einen gemeinsamen Brennpunkt aufweisen, an welchem der Verstärkerkristall angeordnet ist.

Vorzugsweise umfasst ein Umlauf: eine erste Reflexion an dem ersten Spiegel zum ersten Fokussierspiegel, eine zweite Reflexion an dem ersten Fokussierspiegel zum zweiten Fokussierspiegel, eine dritte Reflexion an dem zweiten Fokussierspiegel zum zweiten Spiegel, eine vierte Reflexion am zweiten Spiegel zum dritten Spiegel, eine fünfte Reflexion am dritten Spiegel zum zweiten Fokussierspiegel, eine sechste Reflexion am zweiten Fokussierspiegel zum ersten Fokussierspiegel, eine siebte Reflexion am ersten Fokussierspiegel zum vierten Spiegel und eine achte Reflexion an dem vierten Spiegel zum ersten Spiegel, wobei Pumplicht und Signallicht mehrere Umläufe durchlaufen.

Vorzugsweise trifft das Pumplicht genau einmal pro Umlauf auf einen der jeweiligen Spiegel und genau zweimal auf einen der jeweiligen Fokussierspiegel.

Vorzugsweise handelt es sich bei dem Verstärkerkristall um Lithiumtantalat, Lithiumniobat, PPLN (periodically poled LiNbO₃), KTP (KTiOPO₄), oder BBO (Ba(BO₂)₂).

Vorzugsweise handelt es sich nicht um einen periodisch gepolten Kristall. Dies vereinfacht deutlich den Herstellungsprozess für den Verstärkerkristall und reduziert somit die Kosten und erhöht die Verfügbarkeit.

Vorzugsweise sind mindestens ein Spiegel und der Verstärkerkristall monolithisch ausgebildet. Hierbei kann eine Seitenfläche des Verstärkerkristalls eine geeignete Beschichtung aufweisen, um eine Reflektivität zumindest für das Pumplicht und das Signallicht zu erzeugen. Alternativ sind zwei Spiegel und der Verstärkerkristall monolithisch ausgebildet. Hierbei kann es sich insbesondere um den ersten Spiegel und den zweiten Spiegel der vorstehen beschriebenen Anordnung handeln und/oder den dritten Spiegel und den vierten Spiegel.

Vorzugsweise sind alle Spiegel der Spiegelanordnung und der Verstärkerkristall monolithisch ausgebildet. Spiegel der Spiegelanordnung sind hierbei insbesondere an den Seitenflächen des Verstärkerkristalls ausgebildet. Hieraus ergeben sich lange Kristallängen, die durchlaufen werden, was insbesondere bei langen Pulslängen von mehr als 1ps, mehr als 1ns und insbesondere cw-Betrieb vorteilhaft sein kann.

Somit ist ein optischer-parametrischer Verstärker geschaffen mit einer sehr hohen Konversionseffizienz auf Grund der Verwendung kurzer Kristalle zur Unterdrückung der Rückkonversion. Hieraus ergibt sich ebenfalls eine große Verstärkungsbandbreite durch die Verwendung kurzer Verstärkerkristalle. Zusätzlich ergibt sich ein sehr hoher Kleinsignalgewinn auf Grund der mehrfachen Verstärkung. Gleichzeitig weist der optischen-parametrischen Verstärker eine gute Leistungsskalierbarkeit auf Grund der Multipassgeometrie. Die Multipassgeometrie wird hierbei erreicht durch eine Spiegelanordnung mit lediglich einer geringen Anzahl an Spiegeln. So sind beispielsweise insbesondere vier Spiegel bereits ausreichend, um eine geeignete Spiegelanordnung zu schaffen.

Nachfolgend wird die Erfindung anhand bevorzugter Ausführungsformen unter Bezugnahme auf die beigefügten Figuren näher erläutert.
- Figur 1A: eine Ausführungsform des erfindungsgemäßen optisch-parametrischen Verstärkers,
- Figur 1B: eine weitere Ausführungsform des erfindungsgemäßen optisch-parametrischen Verstärkers,

- Figur 1C: eine weitere Ausführungsform des erfindungsgemäßen optisch-parametrischen Verstärkers,
- Figur 1D: eine weitere Ausführungsform des erfindungsgemäßen optisch-parametrischen Verstärkers,
- Figur 2: ein Dispersionsdiagramm der Spiegelanordnung,
- Figur 3: eine weitere Ausführungsform des optischen-parametrischen Verstärkers gemäß der vorliegenden Erfindung und
- Figur 4: Charakterisierung des optisch-parametrischen Verstärkers gemäß Figur 1.

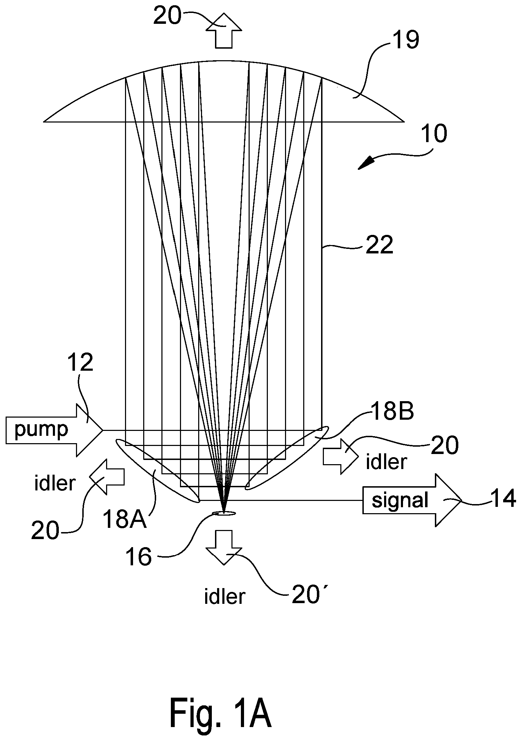

Figur 1A zeigt einen optisch-parametrischen Verstärker gemäß der vorliegenden Erfindung. Der optisch-parametrische Verstärker weist eine Spiegelanordnung 10 auf mit einem ersten Spiegel 18A, einem zweiten Spiegel 18B, einem Fokussierspiegel 19 und einem Kristallspiegel, der mit einem Verstärkerkristall kombiniert ist. Dabei kann der Kristallspiegel 16 unmittelbar auf eine Seite des Verstärkerkristalls aufgebracht sein oder kann beispielsweise unmittelbar an den Verstärkerkristall angrenzen. Insbesondere sind der Kristallspiegel 16 und der Verstärkerkristall monolithisch ausgebildet. Dabei sind zumindest der erste Spiegel 18A, der zweite Spiegel 18B sowie der Fokussierspiegel 19 als dichroische Spiegel ausgebildet. Insbesondere sind alle Spiegel als dichroische Spiegel ausgebildet. Der Verstärkerkristall ist im Brennpunkt des Fokussierspiegels 19 angeordnet. Pumplicht 12 gelangt über einen Einkoppelspiegel in die Spiegelanordnung 10. Ebenfalls kann unverstärktes Signallicht über den Einkoppelspiegel in die Spiegelanordnung 10 eingekoppelt und sodann im Verstärkerkristall verstärkt werden. In dem Beispiel der Figur 1A dient der zweite Spiegel 18B ebenfalls als Einkoppelspiegel. Vom zweiten Spiegel 18B wird das Pumplicht 12 zum Fokussierspiegel 19 reflektiert und sodann zum Verstärkerkristall geführt. Nachfolgend wird in dem Verstärkerkristall Signallicht 14 und Idlerlicht aus dem Pumplicht 12 erzeugt. Pumplicht 12, Signallicht 14 und Idlerlicht sind dabei kollinear innerhalb der Spiegelanordnung 10 geführt, wobei diese somit einheitlich als ein Lichtstrahl 22 in den Figuren dargestellt sind. Sodann werden Signallicht 14 und Pumplicht 12 am Kristallspiegel 16 reflektiert durch den Verstärkerkristall zum Fokussierspiegel 19 und von diesem zum ersten Spiegel 18A. Vom ersten Spiegel 18A wird sodann Pumplicht 12 und Signallicht 14 zum zweiten Spiegel 18B reflektiert, wobei ein weiterer Umlauf beginnt. Das Pumplicht 12 und zumindest auch das Signallicht 14 werden dabei entlang mehrerer Umläufe innerhalb der Spiegelanordnung 10 durch den Verstärkerkristall gelenkt. Hierbei erfolgt jedes Mal eine Konversion des Pumplichts 12 in Signallicht 14 und Idlerlicht. Die Spiegel 18A, 18B, 19 und/oder der Kristallspiegel 16 der Spiegelanordnung 10 sind dabei zumindest teilweise transparent für das Idlerlicht, wie in der Figur 1A angedeutet. Idlerlicht 20, 20' verlässt somit die Spiegelanordnung 10 und steht in einem nachfolgenden Umlauf nicht mehr zur Verfügung beispielsweise für eine Rückkonversion, also die Rekombination von Signallicht 14 und Idlerlicht zu Pumplicht 12. Nach mehreren Umläufen verlässt das Signallicht 14 die Spiegelanordnung 10. Hierbei dient der erste Spiegel 18A auch als Auskoppelspiegel für das Signallicht 14. Hierbei wird ebenfalls das verbleibende Pumplicht 12 aus der Verstärkeranordnung 10 herausgeführt. Das Pumplicht 12 durchläuft im Beispiel der Figur 1A bei einem Durchlauf der Spiegelanordnung 10 fünf Umläufe. Bei jedem dieser Umläufe wird der Kristall 2-mal durchlaufen, so dass durch die Spiegelanordnung Pumplicht 12 insgesamt 10-mal durch den Verstärkerkristall geführt wird.

Insbesondere kann jede der Spiegelanordnungen 10 der Figuren bidirektional durchlaufen werden, so dass die Spiegelanordnung 10 in einem Resonator betrieben werden kann. Hierbei wird dann Pumplicht über den ersten Spiegel 18A eingekoppelt, wobei erzeugtes Signallicht die Spiegelanordnung 10 über den zweiten Spiegel 18B verlässt. Die Pfeile in den Figuren für Pumplicht 12 und Signallicht 14 sind hierbei zu vertauschen.

Durch die Verwendung der Multipassgeometrie der Spiegelanordnung 10 kann eine gute Leistungsskalierung erreicht werden und insbesondere ist es möglich einen nur kurzen Verstärkerkristall zu verwenden. Durch die Verwendung eines kurzen Verstärkerkristalls kann die Rückkonversion unterdrückt werden und gleichzeitig eine hohe Verstärkungsbandbreite gewährleistet werden. Somit wird ein optisch-parametrischer Verstärker geschaffen mit einer hohen Verstärkung, einer großen Verstärkungsbandbreite und einer hohen Konversionseffizienz. Insbesondere liegt die Photonenkonversionseffizienz bei mehr als 60 %, insbesondere mehr als 70 % und vorzugsweise mehr als 80 %. Hierbei kann die große Verstärkerbandbreite genutzt werden zur direkten Verstärkung von Pulsen mit einer Pulslänge von weniger als 1ps, insbesondere weniger als 500fs und bevorzugt bis zu einer Pulslänge von 10fs.

Wie in Figur 1A dargestellt kommt der optische-parametrische Verstärker mit einer geringen Anzahl an optischen Elementen aus, sodass Kosten und Justageaufwand klein gehalten werden können. Gleichzeitig können Kosten reduziert werden, da kleine Kristalle verwendet werden können. Insbesondere der aufwendige Schritt des periodischen Polens ist nicht zwingend notwendig, sodass ein kostengünstiger Verstärkerkristall verwendet werden kann.

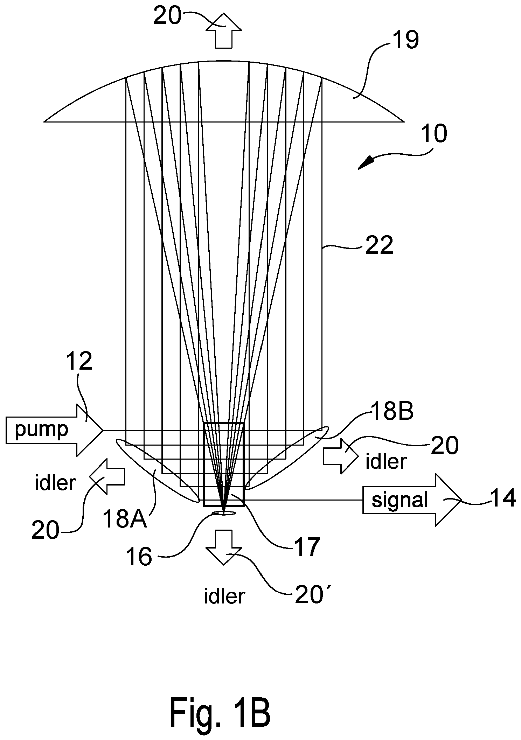

Figuren 1B bis 1D zeigen alternative Ausführungsformen. Hierbei ist insbesondere die Anordnung des Verstärkerkristalls 17 verändert. In der Figur 1B ist der Verstärkerkristall im Strahlengang zwischen dem ersten Spiegel 18A und dem zweiten Spiegel 18B angeordnet. Pumplicht 12 durchläuft zusammen mit dem Signallicht 14 den Verstärkerkristall 17 an unterschiedlichen Orten. Hierdurch kann eine große Wechselwirkungsstrecke zwischen dem Verstärkerkristall 17 und dem Pumplicht 12 erreicht werden zur Verstärkung des Signallichts. Dies kann insbesondere vorteilhaft sein bei der Verwendung von langen Verstärkerkristallen mit Längen von mehr als 25mm und insbesondere bei der Verstärkung von großen Pulslängen von mehr als 1ps, 1ns oder cw-Betrieb.

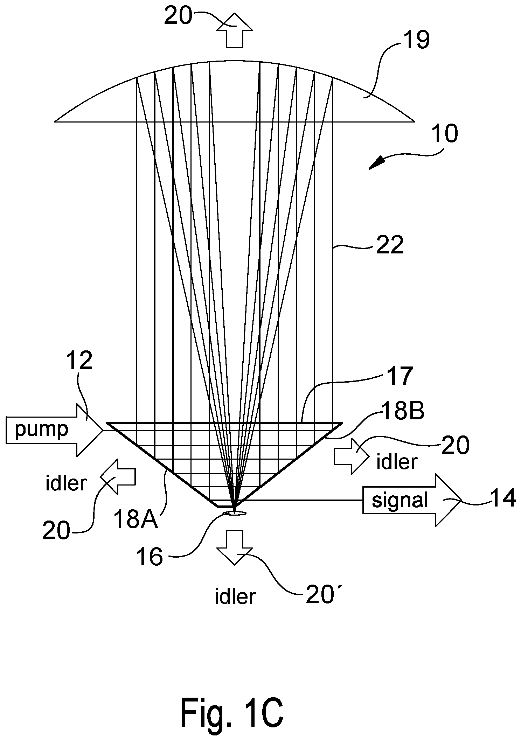

Figur 1C zeigt eine alternative Ausführungsform, wobei der erste Spiegel 18A , der zweite Spiegel 18B und der Verstärkerkristall 17 monolithisch ausgebildet sind. Insbesondere sind die Spiegel 18A und 18B in Seitenflächen des Verstärkerkristalls 17 integriert beispielsweise durch eine geeignete Beschichtung der Seitenflächen zur Ausbildung eines dichroischen Spiegels. Insbesondere kann auch der Kristallspiegel 16 monolithisch mit dem Verstärkerkristall 17 ausgebildet sein.

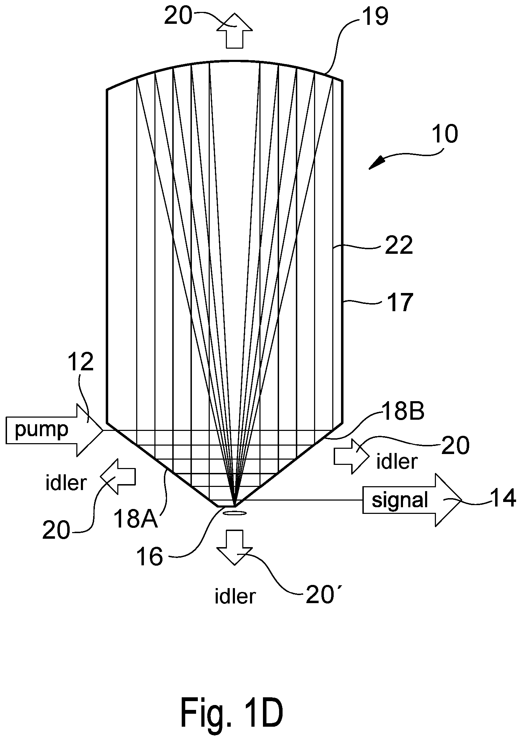

In der Ausführungsform der Figur 1D ist zusätzlich auch der Fokussierspiegel 19 monolithisch mit dem Verstärkerkristall 17 ausgebildet, so dass die gesamte Spiegelanordnung 10 zusammen mit dem Verstärkerkristall 17 ausgebildet ist.

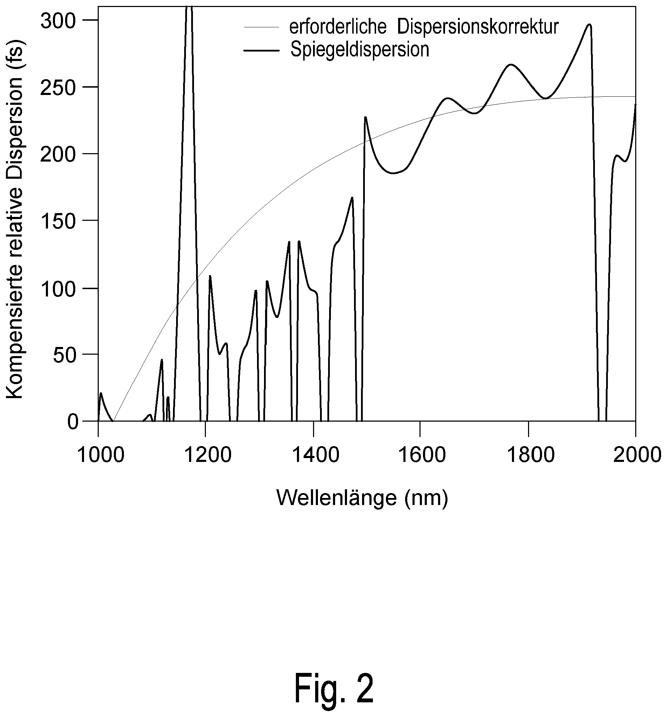

Figur 2 zeigt die Gruppengeschwindigkeitsdispersion der Spiegel 18A, 18B, 19. Hierbei wird eine Gruppengeschwindigkeitskompensation erreicht in einem Bereich von etwa 1450 nm - 1900 nm, welche gerade die Dispersion des Pumplichts und des Signallichts kompensiert. Dabei ist zu erkennen, dass in einem Bereich von etwa 1450 nm - 1900 nm eine ausreichende Kompensation der Dispersion durch die Spiegel ermöglicht wird.

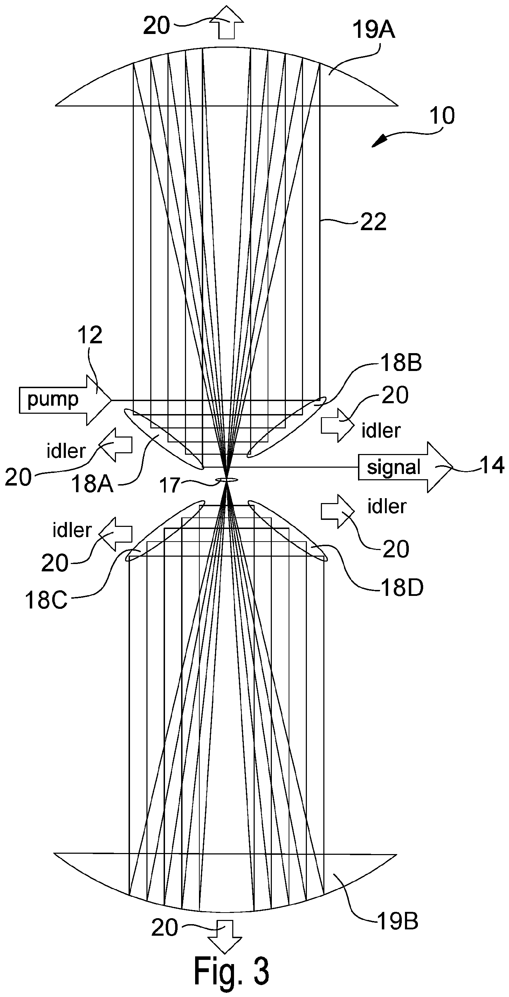

Es wird Bezug genommen auf Figur 3. Die Ausführungsform der Figur 3 des optisch-parametrischen Verstärkers zeigt eine Spiegelanordnung 10', bei der im Vergleich zu der Spiegelanordnung 10 der Figuren 1A bis 1D der Kristallspiegel 16 entfernt wurde und eine symmetrische Spiegelanordnung unterhalb des Verstärkerkristalls 17 angeordnet wurde. Gleiche oder ähnliche Bauteile werden in Figur 3 mit identischen Bezugszeichen gekennzeichnet.

Somit weist die Spiegelanordnung 10' der Figur 3 einen ersten Spiegel 18A, einen zweiten Spiegel 18B, einen dritten Spiegel 18C und einen vierten Spiegel 18D auf. Weiterhin weist die Spiegelanordnung 10 einen ersten Fokussierspiegel 19A und einen zweiten Fokussierspiegel 19B auf. Fokussierspiegel 19A und Fokussierspiegel 19B sind dabei so angeordnet, dass sie einen gemeinsamen Brennpunkt aufweisen. An diesem gemeinsamen Brennpunkt ist der Verstärkerkristall 17 angeordnet.

Pumplicht 12 und Signallicht 14 werden somit in einem Umlauf beginnend am ersten Spiegel 18A zum zweiten Spiegel 18B reflektiert. Vom zweiten Spiegel 18B wird Pumplicht 12 und das Signallicht 14 zum ersten Fokussierspiegel 19A reflektiert und sodann auf den Verstärkerkristall 17 fokussiert. Das Pumplicht 12 tritt durch den Verstärkerkristall 17 und Signallicht 14 und Idlerlicht werden erzeugt. Signallicht, Idlerlicht und Pumplicht gelangen zum zweiten Fokussierspiegel 19B. Zumindest Pumplicht 12 und Signallicht 14 werden hier reflektiert zum dritten Spiegel 18C und von diesem reflektiert auf den vierten Spiegel 18D. Vom vierten Spiegel 18D gelangen Pumplicht 12 und Signallicht 14 wieder zum zweiten Fokussierspiegel 19B, werden erneut auf den Verstärkerkristall 17 fokussiert und gelangen wieder zum ersten Fokussierspiegel 19A, von dem sie auf den ersten Spiegel 18A reflektiert werden. Pumplicht 12 und Signallicht 14 durchlaufen dabei mehrere Umläufe. Idlerlicht 20 wird dabei beispielsweise an einem der Spiegel 18A, 18B, 18C, 18D nicht reflektiert oder zumindest teilweise nicht reflektiert. Ebenso können der erste Fokussierspiegel 19A bzw. der zweite Fokusspierspiegel 19B Idlerlicht 20 nicht oder nur teilweise reflektieren. Idlerlicht 20 wird somit an den Spiegel transmittiert oder absorbiert und steht dabei einem Rückkonversionsprozess im Verstärkerkristall 17 nicht mehr zur Verfügung. Nach Durchlaufen mehrere Umläufe wird sodann das Signallicht 14 über einen Auskoppelspiegel, welcher durch den ersten Spiegel 18A bereitgestellt wird, ausgekoppelt. Ebenso wird verbleibendes Pumplicht 12 ausgekoppelt. Die Ausführungsform der Figur 3 ist dabei besonders geeignet für hohe Leistungen, da kein Spiegel im Bereich des Fokus, also im Bereich hoher Leistungsdichte, vorgesehen sein muss.

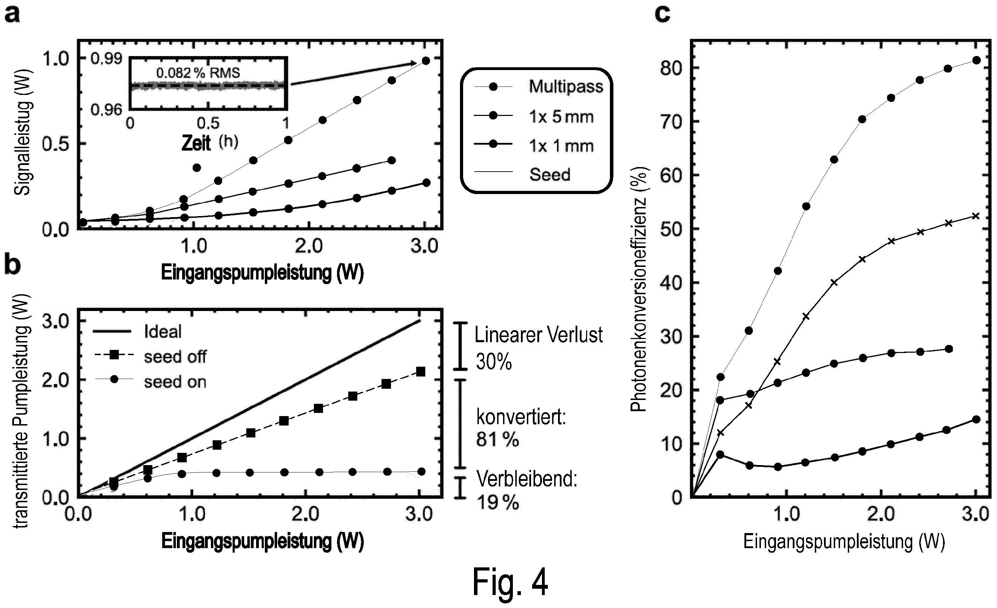

Figur 4 zeigt eine Charakterisierung des optischen-parametrischen Verstärkers gemäß der Figur 1. Hierbei ist in der Figur 4a für verschiedene Pumpleistungen die sich daraus ergeben Signalleistung abgebildet ("Multipass"). Als Vergleich ist der einfache Durchtritt durch einen 1 mm langen Kristall und einem 5 mm langen Kristall dargestellt. Wie klar ersichtlich aus der Figur 4a ergibt sich eine gute Skalierbarkeit des optischen-parametrischen Verstärkers gemäß der vorliegenden Erfindung.

Figur 4b stellt die Konversionseffizienz dar. Hierbei ist ersichtlich, dass 81 % des Pumplichts in Signallicht und/oder Idlerlicht umgewandelt wird. Dies ist ebenfalls in der Figur 4c für unterschiedliche Pumpleistungen dargestellt, wobei ersichtlich ist, dass die Konversionseffizienz deutlich über den als Vergleich dargestellten Einfach-Durchgängen durch einen 5 mm langen Kristall bzw. einen 1 mm langen Kristall liegen.

Somit ist ein optisch-parametrischer Verstärker geschaffen mit einer sehr hohen Konversionseffizienz und einer guten Skalierbarkeit der Leistung.

## Patentansprüche

1. Optisch-Parametrischer Verstärker mit
einem Verstärkerkristall und
einer Spiegelanordnung mit einer Vielzahl an Spiegeln,
wobei die Spiegelanordnung einen Einkoppelspiegel und einen Auskoppelspiegel aufweist, wobei über den Einkoppelspiegel Pumplicht in die Spiegelanordnung eingekoppelt wird, wobei mittels des Pumplichts im Verstärkerkristall Signallicht und Idlerlicht erzeugt wird, wobei das Signallicht die Spiegelanordnung über den Auskoppelspiegel verlässt,
wobei in der Spiegelanordnung das Pumplicht in mehreren Umläufen in der Spiegelanordnung mehrfach durch den Verstärkerkristall gelenkt wird, und
wobei Pumplicht und Signallicht kollinear in der Spiegelanordnung geführt sind.

2. Optisch-Parametrischer Verstärker nach Anspruch 1, **dadurch gekennzeichnet, dass** das Pumplicht nur einmal die Spiegelanordnung durchläuft.

3. Optisch-Parametrischer Verstärker nach Anspruch 1, **dadurch gekennzeichnet, dass** die Spiegelanordnung in einem Resonator, insbesondere einem Faser-Feedback Resonator angeordnet ist.

4. Optisch-Parametrischer Verstärker nach einem der Ansprüche 1 bis 3, **dadurch gekennzeichnet, dass** der Verstärkerkristall in einem Brennpunkt der Spiegelanordnung angeordnet ist.

5. Optisch-Parametrischer Verstärker nach einem der Ansprüche 1 bis 4, **dadurch gekennzeichnet** das Pumplicht und/oder das Signallicht mehrfach auf einen oder mehrere Spiegel der Spiegelanordnung trifft.

6. Optisch-Parametrischer Verstärker nach einem der Ansprüche 1 bis 5, **dadurch gekennzeichnet, dass** einer oder mehrere der Spiegel der Spiegelanordnung zumindest teilweise transparent sind für das Idlerlicht.

7. Optisch-Parametrischer Verstärker nach einem der Ansprüche 1 bis 6, **dadurch gekennzeichnet, dass** der Verstärkerkristall eine Länge hat, die gleich oder kleiner ist als die Walk-off Länge zwischen Signallicht und Pumplicht ist.

8. Optisch-Parametrischer Verstärker nach einem der Ansprüche 1 bis 7, **dadurch gekennzeichnet, dass** das Pumplicht auf einem oder mehreren der Spiegel an unterschiedlichen Orten auf einer Spiegeloberfläche des Spiegels reflektiert werden.

9. Optisch-Parametrischer Verstärker nach einem der Ansprüche 1 bis 8, **dadurch gekennzeichnet, dass** die Dispersion der Spiegel der Spiegelanordnung die Dispersion von Signallicht und Pumplicht pro Umlauf kompensieren.

10. Optisch-Parametrischer Verstärker nach einem der Ansprüche 1 bis 9, **dadurch gekennzeichnet, dass** die Photonenkonversionseffizient größer 60%, vorzugsweise größer 70% und besonders bevorzugt größer 80% ist.

11. Optisch-Parametrischer Verstärker nach einem der Ansprüche 1 bis 10, **dadurch gekennzeichnet, dass** die Spiegelanordnung einen ersten Spiegel, einen Fokussierspiegel, einen zweiten Spiegel und einen Kristallspiegel aufweist, wobei ein Umlauf aufweist: eine erste Reflexion auf dem ersten Spiegel zum Fokussierspiegel, eine zweite Reflexion auf dem Fokussierspiegel zum Kristallspiegel, eine dritte Reflexion auf dem Kristallspiegel zum Fokussierspiegel, eine vierte Reflexion auf dem Fokussierspiegel zum zweiten Spiegel und eine fünfte Reflexion auf dem zweiten Spiegel zum ersten Spiegel, wobei Pumplicht und Signallicht mehrere Umläufe durchlaufen.

12. Optisch-Parametrischer Verstärker nach Anspruch 11, **dadurch gekennzeichnet, dass** der Verstärkerkristall durchlaufen wird zwischen dem Fokussierspiegel und dem Kristallspiegel.

13. Optisch-Parametrischer Verstärker nach Anspruch 11, **dadurch gekennzeichnet, dass** der Verstärkerkristall durchlaufen wird zwischen dem zweiten Spiegel und dem ersten Spiegel, wobei der Verstärkerkristall insbesondere an unterschiedlichen Stellen durchlaufen wird.

14. Optisch-Parametrischer Verstärker nach einem der Ansprüche 1 bis 12, **dadurch gekennzeichnet, dass** die Spiegelanordnung einen ersten Spiegel, einen ersten Fokussierspiegel, einen zweiten Spiegel, einen dritten Spiegel, einen zweiten Fokussierspiegel und einen vierten Spiegel aufweist, wobei der erste Fokussierspiegel und der zweite Fokussierspiegel einen gemeinsamen Brennpunkt aufweisen, an welchem der Verstärkerkristall angeordnet ist.

15. Optisch-Parametrischer Verstärker nach Anspruch 13, **dadurch gekennzeichnet, dass** ein Umlauf aufweist: eine erste Reflexion an dem ersten Spiegel zum ersten Fokussierspiegel, eine zweite Reflexion an dem ersten Fokussierspiegel zum zweiten Fokussierspiegel, eine dritte Reflexion an dem zweiten Fokussierspiegel zum zweiten Spiegel, eine vierte Reflexion am zweiten Spiegel zum dritten Spiegel, eine fünfte Reflexion am dritten Spiegel zum zweiten Fokussierspiegel, eine sechste Reflexion am zweiten Fokussierspiegel zum ersten Fokussierspiegel, eine siebte Reflexion am ersten Fokussierspiegel zum vierten Spiegel und eine achte Reflexion an dem vierten Spiegel zum ersten Spiegel, wobei Pumplicht und Signallicht mehrere Umläufe durchlaufen.
